# DEMANDE DE BREVET EUROPEEN

(11) **EP 0 526 354 A1**
(43) Date de publication de la demande: **03.02.1993**
(21) Numéro de dépôt: 92420244.3
(22) Date de dépôt: 21.07.1992
(51) Int. Cl.: C04B 28/06

(54) **Mortier souple pour le revêtement interne et/ou externe d'ouvrages en ciment, béton, acier ou fonte, et procédé pour sa mise en oeuvre**

(30) Priorité: 23.07.1991 FR 9109568
(71) Demandeur: DUNE TRAVAUX SPECIALISES, F-69100 VILLEURBANNE (FR)
(72) Inventeur: Prin, Dominique, F-69120 Vaulx en Velin (FR); Remy, Pascal, F-69100 Villeurbanne (FR)
(74) Mandataire: Laurent, Michel

(57) **Abrégé**

Mortier souple pour imperméabiliser le revêtement interne et/ou exteme d'ouvrages en ciment, béton, acier, fonte, constitué par une phase liquide et par une phase hydraulique :
- dans lequel la phase liquide est une phase organique comprenant de l'eau et une émulsion de latex ;
- et dans lequel la phase hydraulique comprend un mélange d'au moins deux silices de granulométrie différente,

**caractérisé** :
- en ce que la phase hydraulique comprend un ciment alumineux fondu ;
- en ce que la phase liquide organique comprend une émulsion aqueuse d'un copolymère de styrène et d'ester acrylique.

L'invention concerne également un procédé pour étancher un ouvrage avec ce mortier.

## Description

L'invention concerne un nouveau mortier souple pour le revêtement interne et/ou externe d'ouvrages en ciment, béton, acier, fonte ; elle se rapporte également à un procédé pour la mise en oeuvre de ce nouveau mortier.

Comme on le sait, il existe actuellement sur le marché de nombreux produits de réparation des bétons et des maçonneries ou des tuyauteries en acier ou en fonte. Pour l'essentiel, un très grand nombre de ces produits n'ont qu'un rôle curratif. En effet, l'eau étant l'agent de transport de la plupart des éléments agressifs, il est nécessaire, pour prévenir toute nouvelle dégradation, d'étanchéifier correctement l'ouvrage.

Un bon produit d'étanchéité doit être compatible avec l'ouvrage à revêtir, permettre une étanchéité à long terme, notamment par rapport aux eaux agressives, avoir une souplesse suffisante pour pouvoir pomper les fissures d'un ouvrage ancien et empêcher leur propagation. En outre, la mise en oeuvre de ce produit et son coût doivent être compatibles avec les exigences de ce marché.

Pour l'essentiel, le problème se pose notamment avec les cuves enterrées, et surtout les conduites en tous genres, notamment de réseaux d'assainissement.

Pour étanchéifier ces ouvrages, on a par exemple proposé de faire appel à des résines de polyuréthane bicomposante monocouche à prise rapide. Si ces produits donnent une étanchéité satisfaisante, et procurent une bonne résistance à l'abrasion et aux attaques chimiques, en revanche, ce produit pèche par sa faible adhérence aux ouvrages et sa sensibilité dans les réseaux d'égoûts ou d'assainissement.

On a suggéré de remplacer ces polyuréthanes par des produits à base de polychlorure de vinyle (PVC), soit sous forme de coque préfabriquée, soit sous forme de feuille thermosoudée. Malheureusement, ces produits s'avèrent difficiles à mettre en oeuvre et sont souvent trop rigides et d'emploi incertain à l'extérieur.

On a également proposé de faire appel à des mortiers de résines, qui donnent d'excellentes propriétés d'imperméabilité, de résistance à l'abrasion et au poinçonnement, une bonne résistance chimique. Ces produits rustiques, donc attractifs par leur coût et leur facilité de mise en oeuvre, sont néanmoins jugés trop rigides pour de nombreuses applications et par voie de conséquence peu résistants aux fissurations. Par exemple, dans le document CH-A-572 007, on a proposé un mortier hydraulique à base de ciment Portland contenant en outre un polymère (acétate de polyvinyle, caoutchouc ou polyacrylate), et deux types de silice de granulométrie différente. Ce mortier rigide convient parfaitement pour assainir les sols, mais du fait même de sa rigidité, il ne permet pas de réhabiliter les canalisations ou les ouvrages fissurés.

L'invention pallie ces inconvénients. Elle vise un mortier souple pour le revêtement interne et/ou externe d'ouvrages en ciment, béton, acier ou fonte, qui confère à ces ouvrages une bonne étanchéification, résiste bien aux effets du vieillissement, et résiste bien aux agents agressifs, chimiques ou autres, tels que l'eau de pluie, les ultra-violets, le gel et les saumures.

L'invention vise également un mortier qui résiste bien aux abrasions des particules et à l'agression chimique, notamment acide (jusqu'à pH3) que l'on trouve fréquemment dans les conduits d'égoûts ou dans les réservoirs d'eau ou d'effluents.

Ce mortier souple pour imperméabiliser le revêtement interne et/ou externe d'ouvrages en ciment, béton, acier, fonte, constitué par une phase liquide et par une phase hydraulique, dans lequel la phase liquide est organique et comprend de l'eau et une émulsion de latex, et dans lequel la phase hydraulique comprend un mélange d'au moins deux silices de granulométrie différente, se caractérise :
- en ce que la phase hydraulique comprend un ciment alumineux fondu ;
- et en ce que la phase liquide organique comprend une émulsion aqueuse d'un copolymère de styrène et d'ester acrylique.

En d'autres termes, l'invention vise un mortier hydraulique particulier consistant à avoir sélectionné comme ciment un ciment alumineux fondu, et comme latex un copolymère de styrène et d'ester acrylique. De manière surprenante, cette double sélection permet avec succès d'imperméabiliser les revêtements en question.

Comme on le sait, un "ciment alumineux fondu", est un ciment obtenu en fondant notamment au four électrique un mélange d'alumine (bauxite) et de calcaire, et qui est fortement chargé en aluminate monocalcite, lequel en présence d'eau, cristallise en aluminate monocalcique hydraté. En pratique, ce ciment alumineux fondu contient au moins 40 % d'alumine. En effet, on a constaté que si cette proportion est inférieure à 40 %, le revêtement présente une moindre résistance à l'abrasion et à la corrosion, ce qui en rend son utilisation peu attractive.

Comme copolymère de styrène et d'ester acrylique, on utilise avantageusement un copolymère de polystyrène et de polyacrylate de butyle contenant, en extraits secs quarante pourcent (40 %) de styrène et soixante pourcent (60 %) d'acrylate de butyle. On a observé que si on diminue la proportion de styrène, le mortier devient trop souple, alors que si on augmente au contraire cette proportion, il devient trop rigide. De même, si on augmente la proportion de polyacrylate de butyle, ce mortier devient également trop souple. Il va de soi que l'on peut utiliser d'autres monomères d'acrylate que le polyacrylate de butyle. Toutefois, celui-ci est préféré pour des raisons de disponibilité et de coût.

Comme silice, on fait appel à des silices pures, notamment à du quartz de granulométrie différente. En pratique, on fait appel à deux types de silice, à savoir :
. tout d'abord, une silice fine, c'est-à-dire dont la maille D50 (au moins la moitié de ces particules ont la dimension indiquée), est de 30 microns ;
. puis une seconde silice plus grossière, dont la maille D50 est voisine de 175 microns.

Dans une variante, on peut optimiser la perméabilité du produit en utilisant un mélange de trois types différents de silice, respectivement :
. une silice fine de D50 comprise entre 30 et 50 microns ;
. une silice moyenne de D50 voisine de 50 microns ;
. une silice plus grossière dont la maille D50 est voisine de 70 microns.

Dans une forme de réalisation préférée, le mortier comprend, à plus ou moins dix pourcent (10 %) près, vingt-sept pourcent (27 %) de la phase liquide organique et soixante treize pourcent (73 %) de la phase hydraulique, caractéristiques.

Dans une forme de réalisation avantageuse, la phase hydraulique caractéristique contient, à plus ou moins dix pourcent (10 %) près :
- 37 % de ciment alumineux fondu,
- 37 % de la première silice fine,
- 26 % de la seconde silice grossière.

Il est impératif que la phase hydraulique contienne un mélange d'au moins deux silices de granulométrie différente. On a observé que si le mélange contient trop de silice fine, il faut plus d'eau pour hydrater, ce qui affecte alors certaines propriétés. De même, on a observé que si la proportion de silice plus grossière est excédentaire, on a trop d'eau.

Dans une forme d'exécution préférée, à plus ou moins dix pourcent (10 %) près, dans la phase hydraulique, la quantité de ciment alumineux fondu est sensiblement égal à la quantité de la première silice fine, alors que la quantité de la seconde silice plus grossière est égale à soixante-dix poucent (70 %) de celle de la première silice.

La phase liquide organique contient:
- de 10 à 15 % d'eau,
- de 80 à 90 % d'une émulsion aqueuse de latex d'un copolymère de styrène ou d'ester acrylique à 50 % en poids d'extraits secs,

le total étant ajusté à cent pourcent (100 %).

Avantageusement, cette phase liquide organique contient un agent stabilisateur associé au styrène.

Cette phase liquide organique peut également contenir d'autres agents, tels que :
- des agents plastifiants,
- des agents stabilisateurs anti-mousse,
- des agents dispersants de charges minérales,
- des agents mouillants,
- et des agents de coalescence.

Dans une forme de réalisation préférée, la phase liquide organique contient :
- 10,7 % d'eau,
- 83,6 % d'une émulsion aqueuse de latex, à 50 % en extraits secs, contenant :
   . 30 % d'acrylate de butyle,
   . 20 % de polystyrène;
- 0,5 % à 1 %, de préférence 0,8 % d'un agent plastifiant, tel que dibutylphtalate ;
- de 0,1 à 0,5 %, de préférence 0,2 %, d'un agent stabilisateur antimousse ;
- de 0,5 à 1 %, de préférence 0,7 %, d'un agent stabilisateur bactériologique ;
- de 0,1 à 1 %, de préférence 0,5 %, d'un agent dispersant des charges minérales, tel qu'un sel d'amonium d'acide polyacrylique en solution aqueuse ;
- de 0,1 à 1 %, de préférence 0,5 % d'un agent mouillant, tel qu'un alkyl phénol ;
- enfin de 2 à 4 %, de préférence 3 %, d'un agent de coalescence, tel que le white-spirit,

le total étant réajusté à cent pourcent (100 %).

Comme déjà dit, on obtient de bons résultats lorsque la proportion de ciment alumineux fondu est, à dix pourcent (10 %) près, égale à la proportion de silice fine, et lorsque la proportion de silice plus grossière est d'environ soixante-dix pourcent (70 %) la quantité de silice fine.

Le mortier caractéristique de l'invention comprend donc essentiellement deux phases qui peuvent être stockées séparément et qui sont mélangées seulement au moment de l'emploi. En pratique, la température de stockage de la phase liquide organique peut varier dans une gamme de température comprise entre 5 et 10°C. Le stockage de la phase hydraulique et caractéristique de l'invention doit être effectué à une température comprise entre -50° et +50°C, ce qui en rend l'usage assez aisé.

L'invention vise également un procédé pour la mise en oeuvre de ce mortier.

Ce procédé consiste:
- dans un premier temps, à mélanger notamment à température ambiante et sous légère agitation, par exemple dans un malaxeur tournant à quelques dizaines de tours par minute, la phase liquide organique en y versant la phase hydraulique caractéristique qui se présente sous la forme de poudre contenant le ciment alumineux fondu et le mélange de silice ;
- puis, à appliquer le mélange obtenu de manière connue sur un ouvrage préalablement nettoyé dégraissé, mais humide.

On a observé que l'ouvrage devait être à une température d'au moins 5°C pour que l'adhérence soit satisfaisante. Le mortier peut être appliqué par toute technique classique connue, tel que projection à l'aide d'une pompe périlstatique, enduction au rouleau, à la brosse ou projection à l'intérieur d'un conduit. On adapte le temps de malaxage en fonction de la rhéologie du mortier. En pratique, le temps de malaxage à température ambiante doit être d'au moins cinq minutes.

Comme déjà dit, il importe que l'ouvrage soit préalablement humidifié avant la mise en place du mortier.

La manière dont l'invention peut être réalisée et les avantages qui en découlent, ressortiront mieux des exemples de réalisation qui suivent.

### Exemple 1 :

On prépare une phase liquide anionique contenant, en poids :
- 10,7 % d'eau ;
- 83,6 % d'une émulsion aqueuse exempte de plastifiant d'un copolymère d'ester acrylique et de styrène, à 50 % en extraits secs, contenant :
   . 30 % d'acrylate de butyle,
   . 20 % de styrène;
- 0,7 % d'un agent stabilisateur bactériologique (isothiazolones) ;
- 0,8 % d'un agent plastifiant de formule générale C₁₆H₂₂O₄;
- 0,2 % d'un agent anti-mousse (dérivés siliconés) ;
- 0,5 % d'un agent dispersant des charges minérales, à savoir celles d'amonium d'acide polyacrylique en solution aqueuse,
- 0,5 % d'un agent mouillant compatible au ciment et au latex : alkyl phénol (C₆₀H₁₂O₃₂)-R avec R = nonylphénol ;
- et enfin 3 % d'un agent de coalescence (white spirit).

De manière séparée, on prépare une phase hydraulique contenant :
- dix kilos de ciment alumine fondu coloré, contenant 45 % d'alumine ;
- dix kilos d'une silice sensiblement pure, dont au moins 90 % a une dimension inférieure à 0,1 mm et dont au moins 40 % inférieure à 0,04 mm ;
- sept kilos d'une seconde silice plus grossière, dont la granulométrie est comprise entre 0,1 et 0,3 mm.

On mélange le ciment et les deux silices par malaxage à température ambiante, de manière à bien homogénéiser l'ensemble.

Lorsque l'on désire mettre en oeuvre le mortier, on verse la phase hydraulique qui se présente sous forme de poudre fine dans un malaxeur, dans lequel à température ambiante, on verse dix kilos de la phase liquide organique ci-dessus (proportions : 27 % de phase liquide organique pour 73 % de phase hydraulique).

On malaxe à 40 tours/minute pendant dix minutes environ.

On obtient alors un mortier coloré, facile à projeter sur une paroi de ciment, de béton ou de maçonnerie, ou à enduire au rouleau, et facile à passer à la brosse sur un conduit ou à projeter à l'intérieur de ce conduit, sous réserve que l'ouvrage soit préalablement nettoyé, dégraissé et humidifié.

Le matériau se présente sous forme d'un liquide présentant une assez forte viscosité qui demeure sous cette forme pendant environ trente minutes. C'est pendant cette période qu'il doit être appliqué. Au delà de trente minutes, la viscosité du mortier a tendance à augmenter, pour finalement aboutir à un matériau visco-élastique adhérant au support.

Le mortier obtenu est parfaitement adapté pour une projection par voie humide et adhère sur les nombreux ouvrages altérés, en particulier fissurés.

Après durcissement à l'air libre, on obtient un revêtement membrannaire souple de forte imperméabilité, parfaitement adhérent (adhérence supérieure à 1 MPa), coloré, résistant bien aux agressions physicochimiques. Ce revêtement garde dans le temps une bonne souplesse et résiste parfaitement à la fissuration. Il est étanche à l'eau, tout en restant perméable à la vapeur.

Le revêtement résiste bien à la corrosion chimique basique (pH 13) sans perte de poids significative, ainsi qu'à la corrosion chimique acide (pH 3). Il présente une bonne résistance à la corrosion acide bactérienne ainsi qu'aux hydrocarbures aromatiques et polycycliques. Il résiste également aux cycles répétés de gel et de dégel et ne présente aucun vieillissement significatif après dix cycles de pluie, gel et ultra-violet.

De la sorte, il peut être utilisé avec succès pour l'étanchéification des réservoirs en béton ou des conduites d'égoûts en ciment ou en fonte.

### Exemple 2 :

On répète l'exemple 1 en supprimant la phase hydraulique.

On obtient une pâte gluante blanche non applicable et non projetable.

### Exemple 3 :

On répète l'exemple 1 en supprimant la silice plus grossière (sept kilos de dimension 0,1 à 0,3 mm).

Le mortier obtenu n'est pas souple et ne présente plus de résistance à la fissuration.

Le mortier selon l'invention se caractérisé par rapport à ceux connus à ce jour par:
- une excellente souplesse qui se conserve dans le temps ;
- une bonne résistance à l'abrasion et à la corrosion, notamment contre les particules et les agents agressifs chimiques acides ;
- une bonne adhérence sur le ciment, le béton, les maçonneries, les fontes, aciers, même humides ;
- une excellente résistance aux fissurations grâce à cette souplesse.

Comme il s'agit d'un produit rustique, donc bon marché et fiable, il ne nécessite pas de précaution d'emploi exceptionnelle dans la mesure du strict respect des proportions des différents matériaux constitutifs, des temps de malaxage lors de la préparation et du conditionnement de l'hydraulique à l'abri de toute humidité importante, et peut donc être facilement mis en oeuvre même par du personnel non spécialisé.

De la sorte, ce mortier peut être utilisé pour étancher des ouvrages très variés en béton, ciment, ou fonte, tels que réservoirs, canalisations, etc..

## Revendications

**1/** Mortier souple pour imperméabiliser le revêtement interne et/ou exteme d'ouvrages en ciment, béton, acier, fonte, constitué par une phase liquide et par une phase hydraulique :
- dans lequel la phase liquide est une phase organique comprenant de l'eau et une émulsion de latex ;
- et dans lequel la phase hydraulique comprend un mélange d'au moins deux silices de granulométrie différente,
**caractérisé** :
- en ce que la phase hydraulique comprend un ciment alumineux fondu ;
- en ce que la phase liquide organique comprend une émulsion aqueuse d'un copolymère de styrène et d'ester acrylique.

**2/** Mortier souple selon la revendication 1, caractérisé en ce que la phase hydraulique contient à plus ou moins dix pourcent (10 %) près:
- 37 % de ciment alumineux fondu,
- 37 % d'une première silice fine, comprenant au moins 90 % de silice de granulométrie inférieure à 0,1 mm, dont au moins 40 % inférieure à 0,04 mm ;
- et 26 % d'une seconde silice plus grossière ayant une granulométrie comprise entre 0,1 et 0,3 mm.

**3/** Mortier souple selon l'une des revendications 1 et 2, caractérisé en ce que à plus ou moins dix pourcent (10 %) près, dans la phase hydraulique, la quantité de ciment alumineux fondu est sensiblement égal à la quantité de la première silice fine, alors que la quantité de la seconde silice plus grossière est égale à 70 % de celle de la première silice.

**4/** Mortier souple selon l'une des revendications 1 à 3, caractérisé en ce que le copolymère de styrène est un copolymère de styrène et de d'acrylate de butyle comprenant en extraits secs 40 % de styrène et 60 % d'acrylate de butyle.

**5/** Mortier souple selon l'une des revendications 1 à 4, caractérisé en ce que la phase liquide organique contient:
- de 10 à 15 % d'eau;
- de 80 à 90 % d'une émulsion aqueuse d'un latex à base d'un copolymère de styrène et d'ester acrylique à 50 % en poids d'extraits secs, contenant :
. 20 % de polystyrène,
. 30 % de polyacrylate de butyle,
le total étant réajusté à cent pourcent (100 %).

**6/** Mortier souple selon la revendication 5, caractérisé en ce que la phase organique liquide contient :
- 10,7 % d'eau ;
- 83,6 % d'une émulsion aqueuse exempte de plastifiant d'un copolymère d'ester acrylique et de styrène à 50 % en extraits secs, contenant :
. 30 % d'acrylate de butyle,
. 20 % de styrène ;
- 0,7 % d'un agent stabilisateur bactériologique (isothiazolones) ;
- 0,8 % d'un agent plastifiant de formule générale C₁₆H₂₂O₄ ;
- 0,2 % d'un agent anti-mousse (dérivés siliconés) ;
- 0,5 % d'un agent dispersant des charges minérales, à savoir sels d'amonium d'acide polyacrylique en solution aqueuse,
- 0,5 % d'un agent mouillant compatible au ciment et au latex : alkyl phénol (C₆H₁₂O₃₂)-R avec R = nonylphénol ;
- et enfin 3 % d'un agent de coalescence (white spirit).

**7/** Mortier souple selon l'une des revendications 1 à 6, caractérisé en ce que plus ou moins à dix pourcent (10 %) près, la phase organique liquide représente 27 % en poids du mélange, alors que la phase hydraulique représente 73 %.

**8/** Procédé pour rendre étanche un ouvrage à base de ciment, béton, acier ou fonte, caractérisé en ce qu'il consiste :
- tout d'abord, à réaliser un mortier par mélange d'une phase liquide organique et d'une phase hydraulique, dans lequel :
. la phase liquide organique comprend de manière connue de l'eau, une émulsion aqueuse d'un copolymère de styrèneester acrylique et un agent stabilisateur ;
. la phase hydraulique comprend un mélange d'un ciment alumineux fondu et d'au moins deux silices de granulométrie différente ;
- puis, à malaxer à température ambiante ces deux phases ;
- puis, à appliquer le mortier souple obtenu sur un ouvrage préalablement humidifié ;
- et enfin, à laisser sécher à l'air libre.
